# EUROPÄISCHE PATENTSCHRIFT

(11) **EP 1 225 330 B1**
(45) Veröffentlichungstag und Bekanntmachung des Hinweises auf die Patenterteilung: **12.04.2006**
(21) Anmeldenummer: 02000551.8
(22) Anmeldetag: 09.01.2002
(51) Int. Cl.: F02P 5/02, F02P 5/15, F02D 19/02, F02D 35/02

(54) **Einrichtung zum Regeln eines fremdgezündeten Verbrennungsmotors**
Apparatus for controlling a spark ignited combustion engine
Dispositif pour la régulation d'un moteur à allumage commandé

(30) Priorität: 18.01.2001 AT 842001
(43) Veröffentlichungstag der Anmeldung: 24.07.2002
(73) Patentinhaber: Jenbacher Aktiengesellschaft, 6200 Jenbach (AT)
(72) Erfinder: Plohberger, Diethard, 6200 Jenbach (AT); Chvatal, Dieter, 6200 Jenbach (AT)
(74) Vertreter: Torggler, Paul Norbert

(56) Entgegenhaltungen:
- DE-A- 3 918 683
- US-A- 4 268 910
- US-A- 4 844 034
- US-A- 5 575 257
- US-A- 5 588 411
- US-A- 5 992 385

## Beschreibung

Die Erfindung betrifft eine Einrichtung zum Regeln eines fremdgezündeten Verbrennungsmotors zum Erreichen eines maximal möglichen Wirkungsgrades des Verbrennungsmotors bei einem vorgebbaren Stickoxydemissionswert, wobei der Verbrennungsmotor eine auf mindestens ein Leistungsstellglied einwirkende Leistungs-Regeleinrichtung aufweist und der Zündzeitpunkt von einer Zündzeitpunkt-Regeleinrichtung, in Abhängigkeit von der Stellung des Leistungsstellgliedes verstellbar ist, wobei der Verbrennungsmotor einen Lambda-Regler zum Regeln des Kraftstoff-Luft-Verhältnisses aufweist, welcher mit der Zündzeitpunkt-Regeleinrichtung in Verbindung steht.

Aus dem europäischen Patent EP 0 259 382 ist es bekannt, den vor den Einlaßventilen des Verbrennungsmotors herrschenden Gemischdruck als Regelgröße heranzuziehen, um letztlich das Verbrennungsgas-Luft-Verhältnis zu regeln. Dieses ist direkt korreliert mit den NOₓ-Anteilen im Abgas, sodaß insgesamt ein Emissionsregler in Form eines LambdaReglers vorliegt. Die Zielgrößen dieser bekannten Motorregelung sind also die Leistung und die Stickoxydemission NOₓ. Um das Regelziel zu erreichen, wird der Ladedruck und das Verbrennungsgas-Luft-Verhältnis Lambda verändert. Leistung und Stickoxydemission sind mit allen Motorgrößen gekoppelt, sodaß der Leistungs- und Emissionsregler im allgemeinen miteinander gekoppelte Regler sind.

Mit einer solchen bekannten Regelstrategie lassen sich zwar die Stickoxydemissionen auf einen vorgegebenen Wert regeln sowie die Leistung auf dem gewünschten Wert halten. Es ist mit der bekannten Regelstrategie aber nicht möglich, immer eine laufende Optimierung des Wirkungsgrades vorzunehmen, weil der optimale Betriebspunkt von Umgebungsbedingungen wie der Ansaugtemperatur, der Aufstellhöhe und der Treibgasqualität abhängt.

Die DE 39 18 683 zeigt ein Verfahren zum Regeln eines fremdgezündeten Gas-Otto-Motors, bei dem der Zündzeitpunkt von einer Zündzeitpunktregeleinrichtung in Abhängigkeit von der Stellung des Leistungsstellgliedes verstellt wird. Ziel ist es, auch bei magerer Betriebsweise die negativen Auswirkungen von Gasqualitätsschwankungen zu vermeiden und gleichzeitig geringe Schadstoffemissionen sicherzustellen.

Aufgabe der Erfindung ist es, eine verbesserte Einrichtung zum Regeln eines fremdgezündeten Verbrennungsmotors der eingangs erwähnten Gattung zu schaffen, mit der es auch bei schwankender Treibgasqualität und schwankenden Umgebungsbedingungen immer möglich ist, einen wirkungsgradoptimalen Betriebspunkt zu halten. Die bereits bisher bekannten Regeleigenschaften auf eine bestimmte Leistung und eine bestimmte (konstante) Emission von Schadstoffen, insbesondere NOₓ, sollen dabei erhalten bleiben.

Dies wird erfindungsgemäß dadurch erreicht, dass ein dem aktuellen Zündzeitpunkt entsprechendes Signal dem Lambda-Regler zuführbar ist und der Lambda-Regler am Istwert-Eingang ein dem Gemischdruck vor den Ventilen des Verbrennungsmotors entsprechendes Istwertsignal empfängt und am Sollwert-Eingang im Sollwertsignal ansteht, das in Abhängigkeit von einem voreinstellbaren Sollwert für die in den Abgasen enthaltene NOₓ-Menge und in Abhängigkeit von den aktuell erfassten Werten der Motorleistung, der Gemischtemperatur vor den Ventilen und des aktuellen Zündzeitpunktes errechenbar ist.

Der Zündzeitpunkt stellt bei aufgeladenen Gas-Otto-Turbomotoren eine weitere Motorgröße dar, die eine Veränderung der erreichbaren Vollast durch späteres Stellen des Zeitpunktes erlaubt. Dies ermöglicht es, eine Regelfunktion zu realisieren, die durch Verändem des Zündzeitpunktes jederzeit eine minimale Regelreservere garantiert. Damit ist es möglich, immer den im Hinblick auf den Wirkungsgrad optimalen Betriebspunkt des Verbrennungsmotors zu fahren, ohne Gefahr zu laufen, bei schwankenden Umweltbedingungen bzw. schwankenden Treibgasqualitäten die geforderten Emissionswerte bzw. die geforderte Leistung nicht mehr zu erreichen.

Dazu kann bevorzugt vorgesehen sein, daß die Zündzeitpunkt-Regeleinrichtung eingangsseitig eine Schwellwerteinrichtung aufweist, die die Zündzeitpunktverstellung auf Stellungen des Leistungsstellgliedes beschränkt, die oberhalb eines voreinstellbaren Wertes und dem Höchstleistungswert des Leistungsstellgliedes liegen. Die Zündzeitpunktsregelung bleibt also so lange inaktiv, bis das Leistungsstellglied, beispielsweise ein Überblasventil, in einem Turbobypass oder die Drosselklappe knapp an der der Höchstleistung entsprechenden Stellung ist. Wenn das Leistungsstellglied eine vorbestimmte Stellung erreicht hat, beispielsweise das Überblasventil bis auf 20% eines Durchlasses gedrosselt ist (und die Drosselklappe bereits vollständig geöffnet ist), greift die Zündzeitpunktregelung ein, indem sie den Zündzeitpunkt auf später verstellt, wodurch die Leistung steigt. Man hat dann beim eigentlichen Leistungsstellglied noch eine Regelreserve zur Verfügung, die es erlaubt, rasch in die Motorleistung bei schwankenden Bedingungen einzugreifen, sodaß der Motor immer seine Leistung halten kann. Das Leistungsstellglied kann dies zeitlich schnell tun, während die Zündzeitpunktregelung nur eine längere Ansprechzeit benötigt. Sie stellt praktisch die Leistungsreserve für das eigentliche Leistungsstellglied bereit, sodaß man immer am optimalen Betriebspunkt an der Leistungsgrenze fahren kann, ohne Gefahr laufen zu müssen, bei ungünstigen äußeren Bedingungen die Motorleistung nicht mehr zu erreichen.

Zusätzlich kann über die Einbeziehung des Zündzeitpunktes in die Regelung verhindert werden, daß die Klopfgrenze überschritten wird. Man kann sich also auch nahe an die Klopfgrenze herantasten. Dazu ist bevorzugt vorgesehen, daß die Zündzeitpunkt-Regeleinrichtung einen Ausgangssignalbeschränker aufweist, der sicherstellt, daß der Zündzeitpunkt jedenfalls nur zwischen zwei voreinstellbaren Grenzen in Richtung spät und in Richtung früh verstellbar ist, wobei ein Klopfregler vorgesehen ist, der eingangsseitig zumindest einen Klopfsensor am Verbrennungsmotor aufweist, und der ausgangsseitig mit dem Ausgangssignalbeschränker in Verbindung steht und beim Auftreten einer klopfenden Verbrennung die effektive Grenze für die Verstellung des Zündzeitpunktes in Richtung früh herabsetzt bis keine klopfende Verbrennung mehr auftritt.

Es ist - wie eingangs erwähnt - bereits bekannt, daß man über eine Regelung des Ladedrucks in Abhängigkeit von den Parametern Motorleistung und Gemischtemperatur vor den Einlaßventilen, das Verbrennungsgas-Luft-Verhältnis und damit die Schadstoffemissionen (NOₓ) regeln kann. Der Zusammenhang zwischen dem Emissionssollwert bzw. dem Sollwert für das Verbrennungsgas-Luft-Verhältnis Lambda einerseits und dem Ladedruck andererseits ist zündzeitpunktabhängig. Aus diesem Grund ist es vorgesehen, dass in diese Emissionsregelung auch der Zündzeitpunkt als Parameter, der variiert. Eingang findet

Weitere Vorteile und Einzelheiten der Erfindung werden anhand der nachfolgenden Figurenbeschreibung näher erläutert.

Die Fig. 1, die Fig. 2 und die Fig. 3 zeigen jeweils schematische Diagramme, wobei auf der X-Achse der Zündzeitpunkt Z aufgetragen ist, während auf der Y-Achse das Verbrennungsgas-Luft-Verhältnis L aufgetragen ist. Die Diagramme stellen also ein Lambda-Zündzeitpunkt-Kennfeld bei konstanter Motorlast dar.

Die Fig. 4 zeigt schematisch ein Ausführungsbeispiel einer erfindungsgemäßen Einrichtung.

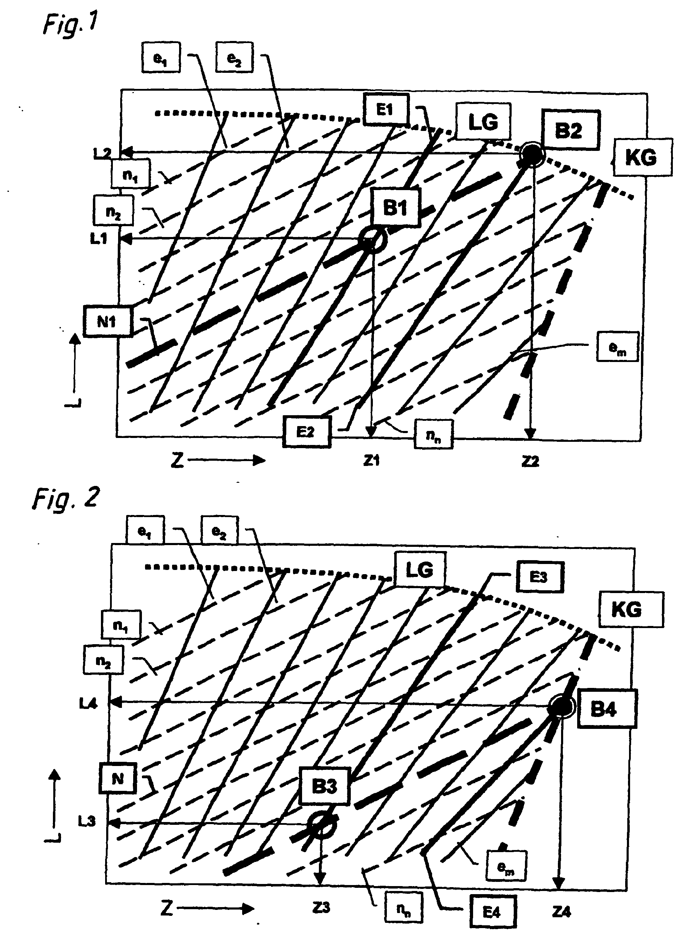

In dem in Fig. 1 dargestellten Ausführungsbeispiel sind die Linien nₗ jene Linien, entlang derer der Betriebspunkt des Motors so ist, daß die Stickstoffemission NOₓ konstant ist. Jeder Betriebspunkt auf einer solchen Linie, insbesondere auf der stärker eingezeichneten Linie N1 hat denselben NOₓ-Emissionswert.

Die Linien eₗ sind die Linien konstanten Wirkungsgrades. Entlang diesen Linien ist der Wirkungsgrad des Verbrennungsmotors konstant, wobei die in Fig. 1 weiter rechts liegenden Linien einen höheren Wirkungsgrad aufweisen.

Der Betriebspunkt B1 liegt auf der Linie N1 und der Linie E1. Er weist somit die geforderte Stickstoffemission auf, hat aber einen nicht ganz optimalen Wirkungsgrad.

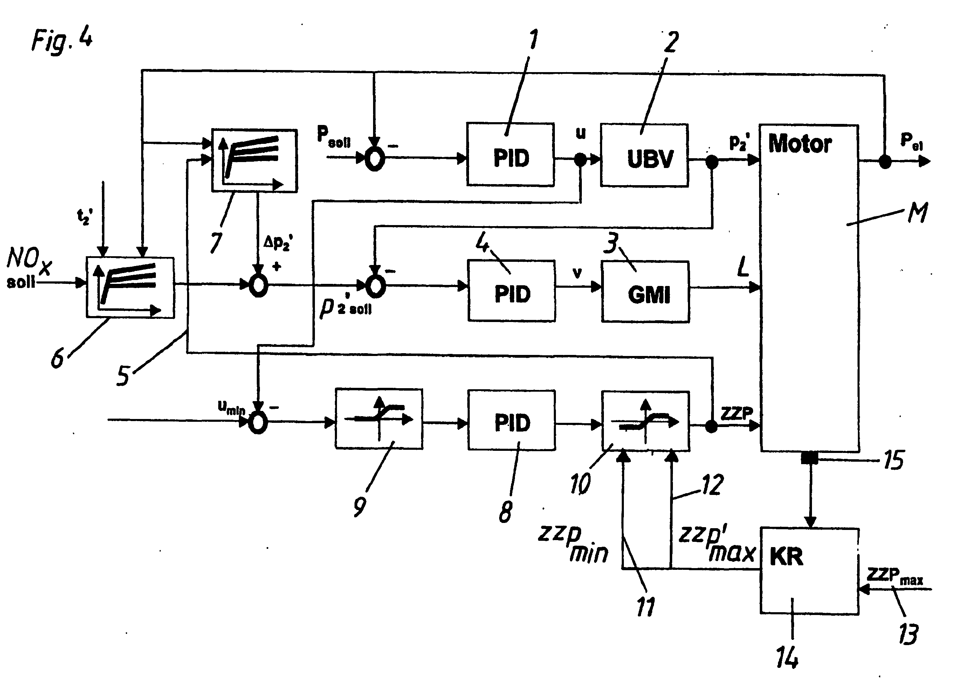

Der später anhand der Fig. 4 erläuterte Regelalgorythmus fährt nun den in Fig. 1 am weitesten rechts liegenden Punkt auf der Emissionslinie N1, nämlich den Punkt B2 an. Dabei ist zu beachten, daß die möglichen Betriebspunkte von der Leistungsgrenze LG (punktiert) und der rechts schräg nach unten führenden Klopfgrenze KG (dick strichliert) begrenzt sind. Der Punkt B2 liegt in Fig. 1 also an der Leistungsgrenze. Er hat den besten Wirkungsgrad E2 bei geforderter Stickstoffemission N1.

Die mögliche Betriebslinie ist also einerseits durch die treibgasabhängige Klopfgrenze KG und andererseits durch die von den Umgebungsbedingungen, wie Ansaugtemperatur, Aufstellhöhe, Abgasgegendruck, abhängige Leistungsgrenze LG begrenzt. Diese Grenzen variieren also in Abhängigkeit von äußeren Bedingungen.

Dabei kann beispielsweise die Situation der Fig. 2 eintreten, bei der der Wirkungsgrad optimalst im Betriebspunkt B4 an der Klopfgrenze und nicht an der Leistungsgrenze, wie in Fig. 1, liegt. Der Wirkungsgrad dieses Betriebspunktes B4 liegt auf der Linie E4 und ist damit wesentlich höher als der Wirkungsgrad eines mit Sicherheitsabstand von der Leistungsgrenze LG und der Klopfgrenze KG liegenden Betriebspunktes B3, welcher bei Regelungen des Standes der Technik eingehalten wurde.

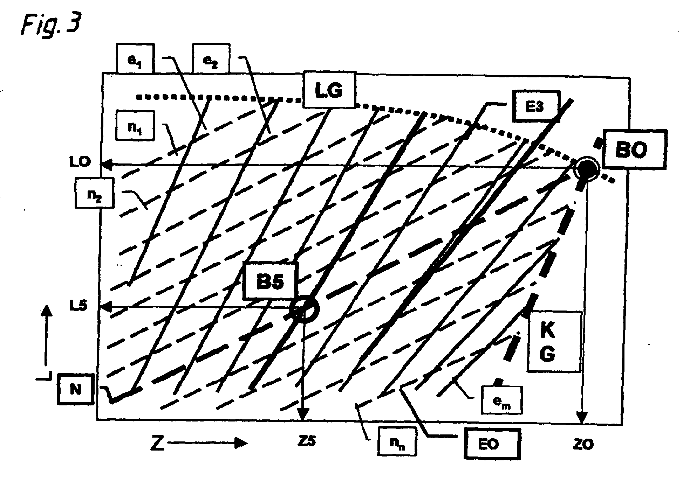

Gemäß Fig. 3 liegen Umwelt- und Treibgasbedingungen vor, die es erlauben, den optimalst möglichen Betriebspunkt BO anzufahren. Er liegt auf dem Schnittpunkt der Leistungsgrenze und der Klopfgrenze und ist damit wesentlich besser im Hinblick auf den Wirkungsgrad als ein üblicher Betriebspunkt B5, der dieselbe Stickstoffemission NOₓ aufweist.

Eine Einrichtung gemäß der Erfindung die in der Lage ist, in den in den Fig. 1 bis 3 dargestellten Diagrammen auf der Linie konstanter Stickoxydemission jenen Punkt anzufahren, der bei früheren Zündzeitpunkten (rechts in Fig. 1 bis 3) und höheren Lambda-Werten (oben in Fig. 1 bis 3) liegt, ist in Fig. 4 dargestellt. Diese Einrichtung stellt außerdem sicher, daß die Klopfgrenze nicht überschritten wird und an der Leistungsgrenze immer noch eine schnelle Regelreserve für die Regelung der Motorleistung bei Veränderung von äußeren Bedingungen erzielbar ist.

Die motorischen Komponenten der Fig. 4, insbesondere der Turbolader, gehören zum Stand der Technik und sind hier nicht näher dargestellt. Es wird dazu auf die früheren Patente EP 0 259 382 oder EP 0 757 169 verwiesen.

In Fig. 4 ist mit dem Bezugszeichen M ein Verbrennungsmotor, insbesondere ein stationärer Gas-Ottomotor, der von einem Turbolader aufgeladen ist, gezeigt. Eine Leistungs-Regeleinrichtung 1 stellt über einen schnellen PID-Regler über das Stellsignal u sicher, daß die Motorleistung Pₑₗ auf den Sollwert Pₛₒₗₗ geregelt wird.

Vor den Einlaßventilen des Motors herrscht der Gemischdruck p₂'. In etwa in der Mitte der Fig. 4 befindet sich die Regeleinrichtung für das Verbrennungsgas-Luft-Verhättnis Lambda (L). Das Stellglied ist ein Gasmischer 3 (GMI), welcher von einem PID-Regler 4 über die Stellgröße V angesteuert wird. Die Lambda-Regelung erfolgt über eine Regelung des Ladedrucks vor den Ventilen, nämlich dem Druck P_{2'}. Der Sollwert p_{2'soll} wird einerseits in bekannter Weise in Abhängigkeit von den gewünschten Stickoxydemissionen NO_{Xsoll} und der Gemischtemperatur t₂' vor den Einlaßventilen und andererseits in Abhängigkeit von der Motorleistung Pₑₗ aus Kennfeldern berechnet. Soweit ist die Lambda-Regelung Stand der Technik und entspricht der EP 0 259 382 bzw. den von der Anmelderin realisierten Motor typen. Neu ist die Tatsache, daß über Berechnung des Sollwertes P_{2'soll} auch der Zündzeitpunkt ZZP miteinbezogen wird, und zwar über die Leitung 5. Es werden also die beiden Kennfelder 6 (NOₓₛₒₗₗ und p_{2'}) sowie 7 (Pₑₗ und ZZP) bei der Berechnung des Gemischdrucksollwertes P_{2'soll} berücksichtigt. Insgesamt stellen diese letztbeschriebenen Komponenten sicher, daß sich der Betriebspunkt des Motors immer auf einer Gerade konstanter NOₓ₋Emission, also beispielsweise der Gerade N1 bzw. N in den Fig. 1 bis 3 befindet, während die oben in Fig. 4 beschriebene Leistungs-Regeleinrichtung die gewünschte Motorleistung einstellt.

In Fig. 4 unten befindet sich nun die erfindungsgemäße Zündzeitpunkt-Regeleinrichtung, die einen PID-Regler 8, eine Schwellwerteinrichtung 9 und einen Ausgangssignalbeschränker 10 umfaßt.

Die Schwellwerteinrichtung 9 stellt sicher, daß die Zündzeitpunktverstellung in Richtung spät, also in Richtung erhöhter Motorleistung erst dann erfolgt, wenn das Leistungsstellglied 2 bereits nahe seiner Vollaststellung ist, also bei einem Ventil in der Umblasleitung dieses fast geschlossen ist. Der Ansprechwert Uₘᵢₙ ist dabei einstellbar. Wenn das Leistungsstellglied in diesen Bereich gelangt, besteht die Gefahr, daß keine ausreichende Regelreserve zur schnellen Ausregelung der Motorleistung vorhanden ist. Deshalb stellt in diesem Fall dann der PID-Regler den Zündzeitpunkt ZZP in Richtung spät. Bei einem aufgeladenen Gas-Ottomotor führt dies zur gewünschten Leistungssteigerung, ohne daß es nötig wäre, daß das Leistungsstellglied auf Anschlag geht. Es steht also immer noch eine Regelreserve zur Verfügung. Der für den Motor typische späteste Zündzeitpunkt ZZPₘᵢₙ kann dabei über den Eingang 11 am Ausgangssignalbeschränker 10 eingestellt werden. In Richtung früher Zündzeitpunkt ist der Wert ZZP_{max'} der über die Leitung 12 zugeführt wird. Dieser Wert ist einerseits von einer motorspezifischen oberen Grenze ZZPₘₐₓ begrenzt, die über den Eingang 13 am Klopfregler einstellbar ist. Andererseits kann dieser Wert ZZPₘₐₓ nach unten verschoben werden, und zwar vom Klopfregler 14, wenn dieser durch am Motor an sich bekannt angebrachte Klopfsensoren 15 ein Klopfgeräusch detektiert. Der Klopfregler KR, 14 setzt also dann den voreingestellten Zündzeitpunktswert ZZPₘₐₓ für den frühestmöglichen Zündzeitpunkt auf den aktuellen Wert ZZP_{max'} herunter. Damit ist sichergestellt, daß die Klopfgrenze nicht überschritten wird und der Motor jedenfalls sauber läuft. Der Nenn-Zündzeitpunkt des Motors wird früher oder gleich ZZPₘₐₓ gesetzt, womit die Regelung grundsätzlich versucht, einen frühen Zündzeitpunkt anzufahren. Die Leistungsreserveregelung und der Klopfregler schieben den aktuellen Zündzeitpunkt auf das nötige Maß in Richtung "spät".

Insgesamt stellt also die in Fig. 4 dargestellte Einrichtung sicher, daß der Motor auf der gewünschten Stickoxydemission NO_{Xsoll} auf der gewünschten Leistung Pₛₒₗₗ mit jeweils maximal möglichem Wirkungsgrad läuft, wobei zur Ausregelung von Leistungsschwankungen immer noch eine schnelle Regelreserve zur Verfügung steht und jedenfalls ein schädliches Klopfen vermieden wird.

## Patentansprüche

1. Einrichtung zum Regeln eines fremdgezündeten Verbrennungsmotors (M) zum Erreichen eines maximal möglichen Wirkungsgrades des Verbrennungsmotors (M) bei einem vorgebbaren Stickoxydemissionswert, wobei der Verbrennungsmotor (M) eine auf mindestens ein Leistungsstellglied (2) einwirkende Leistungs-Regeleinrichtung aufweist und der Zündzeitpunkt (ZZP) von einer Zündzeitpunkt-Regeleinrichtung (8,9,10), in Abhängigkeit von der Stellung des Leistungsstellgliedes (2) verstellbar ist, wobei der Verbrennungsmotor einen Lambda-Regler (4,6,7) zum Regeln des Kraftstoff-Luft-Verhältnisses aufweist, welcher mit der Zündzeitpunkt-Regeleinrichtung in Verbindung steht, **dadurch gekennzeichnet, dass** ein dem aktuellen Zündzeitpunkt (ZZP) entsprechendes Signal dem Lambda-Regler (4,6,7) zuführbar ist und der Lambda-Regler (4,6,7) am Istwert-Eingang ein dem Gemischdruck (P₂') vor den Ventilen des Verbrennungsmotors (M) entsprechendes Istwertsignal empfängt und am Sollwert-Eingang ein Sollwertsignal (P₂'soll) ansteht, das in Abhängigkeit von einem voreinstellbaren Sollwert (NOₓ soll) für die in den Abgasen enthaltene NOₓ-Menge und in Abhängigkeit von den aktuell erfassten Werten der Motorleistung(Pₑₗ), der Gemischtemperatur (t₂') vor den Ventilen und des aktuellen Zündzeitpunktes (ZZP) errechenbar ist.

2. Einrichtung nach Anspruch 1, **dadurch gekennzeichnet, daß** die Zündzeitpunktverstellung auf Stellungen des Leistungsstellgliedes (2) beschränkt wird, die oberhalb eines voreinstellbaren Wertes im Bereich des Höchstteistungswertes des Leistungsstellgliedes liegen.

3. Einrichtung nach Anspruch 1 oder 2, **dadurch gekennzeichnet, daß** von einem Ausgangssignalbeschränker (10) der Zündzeitpunkt-Regeleinrichtung (8, 9, 10) sichergestellt wird, daß der Zündzeitpunkt jedenfalls nur zwischen zwei voreinstellbaren Grenzen (ZZP_{MIN}) in Richtung spät und (ZZP_{MAX}) in Richtung früh verstellt wird.

4. Einrichtung nach Anspruch 3, **dadurch gekennzeichnet, daß** beim Auftreten einer klopfenden Verbrennung die effektive Grenze (ZZP_{MAX}) für die Verstellung des Zündzeitpunktes in Richtung früh herabgesetzt wird bis keine klopfende Verbrennung mehr auftritt.

5. Einrichtung nach einem der Ansprüche 1 bis 4, **dadurch gekennzeichnet, dass** sie zum Erreichen eines maximal möglichen Wirkungsgrades des Verbrennungsmotors in unmittelbarer Nähe zu dessen Leistungsgrenze und/oder Klopfgrenze geeignet ist.

6. Einrichtung nach einem der Ansprüche 1 bis 5, **dadurch gekennzeichnet, dass** sie zum Regeln eines stationären aufgeladenen Gas-Otto-Motors geeignet ist.

7. Einrichtung nach einem der Ansprüche 1 bis 6, **dadurch gekennzeichnet, dass** der Lambda-Regler (4,6,7) auf einen Gasmischer (3) einwirkt.

## Revendications

1. Dispositif de réglage d'un moteur à allumage commandé (M) pour obtenir un rendement maximum possible du moteur à allumage commandé (M) avec une valeur d'émission de dioxyde d'azote prédéfinissable, le moteur à allumage commandé (M) comportant un dispositif de réglage de puissance agissant sur au moins un organe de réglage de la puissance (2) et le point d'allumage (ZZP) pouvant être réglé par un dispositif de réglage du point d'allumage (8, 9, 10) en fonction de la position de l'organe de réglage de la puissance (2), le moteur à allumage commandé comportant un régulateur lambda (4, 6, 7), qui est destiné à régler le rapport du mélange carburant-air et qui est en liaison avec le dispositif de réglage du point d'allumage, **caractérisé en ce qu'**un signal correspondant au point d'allumage (ZZP) actuel peut être acheminé vers le régulateur lambda (4, 6, 7) et le régulateur lambda (4, 6, 7) recevant à l'entrée des valeurs réelles un signal de valeur réelle correspondant à la pression du mélange (P'₂) en amont des soupapes du moteur à allumage commandé (M) et un signal de valeur de consigne (P'_{2 soll}) est appliqué à l'entrée des valeurs de consigne, lequel peut être calculé en fonction d'une valeur de consigne (NO_{x soll}) préréglable pour la quantité de NOₓ contenue dans les gaz d'échappement et en fonction des valeurs actuelles enregistrées de la puissance du moteur (Pₑₗ), de la température du mélange (t₂') en amont des soupapes et du point d'allumage (ZZP) actuel.

2. Dispositif selon la revendication 1, **caractérisé en ce que** le réglage du point d'allumage est limité à des positions de l'organe de réglage de la puissance (2) qui se situent au-dessus d'uné valeur préréglable dans le domaine de la valeur de puissance maximale de l'organe de réglage de la puissance (2).

3. Dispositif selon la revendication ou 2, **caractérisé en ce qu'**un limiteur de signaux de sortie (10) du dispositif de réglage du point d'allumage (8, 9, 10) permet de garantir que le point d'allumage est réglé en tout cas seulement entre deux limites préréglables, à savoir (ZZP_{MIN}) dans le sens regardé et (ZZP_{MAX}) dans le sens prématuré.

4. Dispositif selon la revendication 3, **caractérisé en ce que**, lorsque la combustion génère des cognements, la limite effective (ZZP_{MAX}) pour le réglage du point d'allumage dans le sens prématuré est rabaissée jusqu'à ce la combustion ne produise plus de cognements.

5. Dispositif selon l'une quelconque des revendications 1 à 4, **caractérisé en ce qu'**il est apte à obtenir un rendement maximum possible du moteur à allumage commandé à proximité immédiate de la limite de puissance de celui-ci et/ou de la limite de cognement.

6. Dispositif selon l'une quelconque des revendications 1 à 5, **caractérisé en ce qu'**il est apte à régler un moteur à combustion de gaz, chargé de manière stationnaire.

7. Dispositif selon l'une quelconque des revendications 1 à 6, **caractérisé en ce que** le régulateur lambda (4, 6, 7) agit sur un mélangeur de gaz (3).

## Claims

1. An arrangement for closed loop controlling an externally ignited internal combustion engine (M) for achieving a maximum possible degree of efficiency of the internal combustion engine (M) at a pre-settable emission value of nitrogen oxide, wherein the internal combustion engine (M) has a power controlling device which acts on at least one power setting member (2) and the ignition time (ZZP) is adjustable by an ignition time controlling device (8, 9, 10) in dependence on the position of the power setting member (2), wherein the internal combustion engine comprises a lambda controller (4, 6, 7) for controlling the fuel-air ratio which is connected with the ignition time controlling device, **characterised in that** a signal corresponding to the current ignition time (ZZP) can be supplied to the lambda controller (4, 6, 7) and at the actual value input the lambda controller receives an actual value signal corresponding to the mixture pressure (P'₂) upstream of the valves of the internal combustion engine (M) and at the reference value input there is a reference value signet (P'₂ soll) which can be calculated in dependence on a pre-settable reference value (NOₓ soll) for the amount of NOₓ contained in the exhaust gases and in dependence on the currently detected values of the engine power (Pₑₗ). the mixture temperature (t₂') upstream of the valves and the current ignition time (ZZP).

2. An arrangement according to claim 1, **characterised in that** the ignition time adjustments are limited to positions of the power setting member (2) which are above a pre-settable value in the range of highest power value of the power setting member (2).

3. An arrangement according to claim 1 or 2, **characterised in that** the ignition time controlling device (8, 9, 10) has an output signal limiter (10) which ensures that the ignition time in any event is only adjusted between two pre-settable limits (ZZP_{MIN}) in the direction late and (ZZP_{MAX}) in the direction early.

4. An arrangement according to claim 3, **characterised in that** upon occurrence of a knocking combustion the effective limit (ZZP_{MAX}) for the adjustment of the ignition time in the direction early is reduced until knocking combustion no longer occurs.

5. An arrangement according to one of claims 1 to 4, **characterised in that** it is suited for achieving a maximum possible degree of efficiency of the internal combustion engine (M) which ranges very close to its performance limit and/or knocking limit.

6. An arrangement according to one of claims 1 to 5, **characterised in that** it is suited for controlling a stationary charged gas-Otto-engine.

7. An arrangement according to one of claims 1 to 6, **characterised in that** the lambda controller (4, 6, 7) acts on a gas mixer (3).
